# EUROPEAN PATENT APPLICATION

(11) **EP 4 848 876 A1**
(43) Date of publication of application: **02.12.2026**
(21) Application number: 24921549.2
(22) Date of filing: 23.10.2024
(51) Int. Cl.: H04W 76/10, H04W 76/11, H04W 28/24, H04L 5/00

(54) **COMMUNICATION METHOD AND COMMUNICATION APPARATUS**

(30) Priority: 30.01.2024 CN 202410138091
(71) Applicant: Huawei Technologies Co., Ltd., Shenzhen, Guangdong 518129 (CN)
(72) Inventor: XU, Yishan, Shenzhen, Guangdong 518129 (CN)
(74) Representative: Huawei European IPR
(86) International application number: PCT/CN2024/126858
(87) International publication number: WO 2025/161525

(57) **Abstract**

This application provides a communication method and a communication apparatus. The method includes: obtaining a first user identifier, where the first user identifier represents a user using a terminal device, or represents a first device connected to the terminal device, or represents a user account used to access an application on the terminal device; and determining that a user plane connection needs to be newly established based on the first user identifier, and sending a connection establishment request, where the connection establishment request is used to request to establish a user plane connection based on the first user identifier. In this solution, the user plane connection is established based on the user identifier, and QoS guarantee for the user plane connection is related to the user identifier, where the user identifier may represent the user using the terminal device, or represent the first device connected to the terminal device, or represent the user account used to access the application on the terminal device, so that QoS guarantee is implemented at a user-identifier granularity, thereby achieving flexible QoS guarantee.

## Description

### CROSS-REFERENCE TO RELATED APPLICATIONS

This application claims priority to Chinese Patent Application No. 202410138091.9, filed with the China National Intellectual Property Administration on January 30, 2024 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

Currently, when a user uses a terminal device (for example, a mobile phone) to play games or watch videos, even if the user logs in to a personal user account, quality of service (quality of service, QoS) guarantee provided by the network for the terminal device is related to subscription data of the terminal device, for example, related to subscription data corresponding to a mobile phone number of the terminal device, but is irrelevant to a logged-in application account. For example, if user A logs in to a game on the mobile phone using a user account 1, QoS guarantee provided by the network is related to subscription data of the mobile phone; and if user B subsequently logs in to the same game on the same mobile phone using a user account 2, the network also provides the same QoS guarantee.

The foregoing QoS guarantee manner is not applicable in some scenarios.

### SUMMARY

This application provides a communication method and a communication apparatus to achieve flexible QoS guarantee.

According to a first aspect, an embodiment of this application provides a communication method. The method may be performed by a terminal device or a module (for example, a chip) used in the terminal device. The method includes: obtaining a first user identifier, where the first user identifier represents a user using the terminal device, or represents a first device connected to the terminal device, or represents a user account used to access an application on the terminal device; and determining that a user plane connection needs to be newly established based on the first user identifier, and sending a connection establishment request, where the connection establishment request is used to request to establish a user plane connection based on the first user identifier.

In the foregoing solution, the user plane connection is established at a user-identifier granularity, and QoS guarantee for the user plane connection is related to the user identifier, where the user identifier may represent the user using the terminal device, or represent the first device connected to the terminal device, or represent the user account used to access the application on the terminal device, so that QoS guarantee is implemented at the user-identifier granularity, thereby achieving flexible QoS guarantee.

In a possible implementation method, the determining that the user plane connection needs to be newly established based on the first user identifier includes: determining policy information corresponding to the first user identifier, where the policy information includes traffic flow information and route selection information, the traffic flow information includes a second user identifier, the second user identifier in the traffic flow information matches the first user identifier, and the route selection information includes the second user identifier; determining, based on the second user identifier in the route selection information, whether a user plane connection matching the second user identifier has been established; and if no user plane connection matching the second user identifier has been established, determining that a user plane connection needs to be newly established based on the first user identifier.

In the foregoing solution, whether a user plane connection needs to be newly established may be accurately determined based on the policy information, which helps implement QoS guarantee based on the user identifier, to achieve flexible QoS guarantee.

In a possible implementation method, the method further includes: determining policy information corresponding to the first user identifier, where the policy information includes traffic flow information and route selection information, the traffic flow information includes a second user identifier, the second user identifier in the traffic flow information matches the first user identifier, and the route selection information includes the second user identifier; determining, based on the second user identifier in the route selection information, whether a user plane connection matching the second user identifier has been established; and if an established user plane connection includes the user plane connection matching the second user identifier, transmitting, by using the user plane connection matching the second user identifier, data corresponding to the first user identifier.

In the foregoing solution, whether a user plane connection needs to be newly established may be accurately determined based on the policy information, which helps implement QoS guarantee based on the user identifier, to achieve flexible QoS guarantee.

In a possible implementation method, the route selection information further includes at least one of the following: domain name information in the first user identifier, domain name information in the second user identifier, or application information corresponding to the first user identifier.

In a possible implementation method, the determining that the user plane connection needs to be newly established based on the first user identifier includes: determining policy information corresponding to the first user identifier, where the policy information includes traffic flow information and route selection information, the traffic flow information includes first domain name information, the first domain name information in the traffic flow information matches second domain name information in the first user identifier, the route selection information includes indication information, and the indication information indicates to establish different user plane connections for user identifiers that do not match each other; determining, based on the indication information in the route selection information, whether a user plane connection matching the first user identifier has been established; and if no user plane connection matching the first user identifier has been established, determining that a user plane connection needs to be newly established based on the first user identifier.

In the foregoing solution, whether a user plane connection needs to be newly established may be accurately determined based on the policy information, which helps implement QoS guarantee based on the user identifier, to achieve flexible QoS guarantee.

In a possible implementation method, the method further includes: determining policy information corresponding to the first user identifier, where the policy information includes traffic flow information and route selection information, the traffic flow information includes first domain name information, the first domain name information in the traffic flow information matches second domain name information in the first user identifier, the route selection information includes indication information, and the indication information indicates to establish different user plane connections for user identifiers that do not match each other; determining, based on the indication information in the route selection information, whether a user plane connection matching the first user identifier has been established; and if an established user plane connection includes the user plane connection matching the first user identifier, transmitting, by using the user plane connection matching the first user identifier, data corresponding to the first user identifier.

In the foregoing solution, whether a user plane connection needs to be newly established may be accurately determined based on the policy information, which helps implement QoS guarantee based on the user identifier, to achieve flexible QoS guarantee.

In a possible implementation method, the route selection information further includes at least one of the following: the first domain name information, the second domain name information, or application information corresponding to the first user identifier.

In a possible implementation method, the determining that the user plane connection needs to be newly established based on the first user identifier includes: determining policy information corresponding to the first user identifier, where the policy information includes an indication indicating to establish different user plane connections for user identifiers that do not match each other; determining, based on the policy information, whether a user plane connection matching the first user identifier has been established; and if no user plane connection matching the first user identifier has been established, determining that a user plane connection needs to be newly established based on the first user identifier.

In the foregoing solution, whether a user plane connection needs to be newly established may be accurately determined based on the policy information, which helps implement QoS guarantee based on the user identifier, to achieve flexible QoS guarantee.

In a possible implementation method, the method further includes: determining policy information corresponding to the first user identifier, where the policy information indicates to establish different user plane connections for user identifiers that do not match each other; determining, based on the indication information in the route selection information, whether a user plane connection matching the first user identifier has been established; and if an established user plane connection includes the user plane connection matching the first user identifier, transmitting, by using the user plane connection matching the first user identifier, data corresponding to the first user identifier.

In the foregoing solution, whether a user plane connection needs to be newly established may be accurately determined based on the policy information, which helps implement QoS guarantee based on the user identifier, to achieve flexible QoS guarantee.

In a possible implementation method, the policy information includes traffic flow information and route selection information, the traffic flow information includes first information, the first information matches any user identifier, and the route selection information includes the indication information.

In a possible implementation method, the route selection information further includes at least one of second information, third information, or fourth information, the second information indicates to send the first user identifier to a network, the third information indicates to send domain name information in the first user identifier to the network, and the fourth information indicates to send application information corresponding to the first user identifier to the network.

In a possible implementation method, the connection establishment request further includes a first parameter, the first parameter is used to determine an authentication server, and the authentication server is configured to perform authentication on the first user identifier.

In the foregoing solution, the terminal device provides the first parameter for a network side, and the network side determines, based on the first parameter, the authentication server configured to provide authentication for the terminal device, so that the authentication server is accurately determined, thereby helping ensure authentication accuracy.

In a possible implementation method, the connection establishment request is carried in a NAS message, the NAS message further includes a first parameter, the first parameter is used to determine an authentication server, and the authentication server is configured to perform authentication on the first user identifier.

In the foregoing solution, the terminal device provides the first parameter for a network side, and the network side determines, based on the first parameter, the authentication server configured to provide authentication for the terminal device, so that the authentication server is accurately determined, thereby helping ensure authentication accuracy.

In a possible implementation method, the first parameter includes one or more of the following: the first user identifier, the domain name information in the first user identifier, identifier information of the authentication server, or the application information corresponding to the first user identifier.

In a possible implementation method, the application information includes one or more of the following: identifier information of the application, identifier information of an application server, identifier information of an application function service, identifier information of an application function, the identifier information of the authentication server, or a domain name corresponding to the application.

In a possible implementation method, the obtaining the first user identifier includes: obtaining the first user identifier from the application on the terminal device; or obtaining the first user identifier from the first device.

According to a second aspect, an embodiment of this application provides a communication method. The method may be performed by a first network element or a module (for example, a chip) used in the first network element. The first network element is a session management network element or a policy control network element. The method includes: receiving a first parameter from a terminal device, where the first parameter includes one or more of the following: a first user identifier, domain name information in the first user identifier, or application information corresponding to the first user identifier, where the first user identifier represents a user using the terminal device, or represents a first device connected to the terminal device, or represents a user account used to access an application on the terminal device; and determining an authentication server based on the first parameter, where the authentication server is configured to perform authentication on the first user identifier.

In the foregoing solution, the terminal device provides the first parameter for the first network element, and the first network element determines, based on the first parameter, the authentication server configured to provide authentication for the terminal device, so that the authentication server is accurately determined, thereby helping ensure authentication accuracy.

In a possible implementation method, the determining the authentication server based on the first parameter includes: sending a first request to a unified data management network element or a unified data repository network element, where the first request includes the first parameter; and receiving a first response from the unified data management network element or the unified data repository network element, where the first response includes identifier information of the authentication server.

In a possible implementation method, the determining the authentication server based on the first parameter includes: determining, based on preconfigured information, identifier information that is of the authentication server and that corresponds to the first parameter, where the preconfigured information includes a correspondence between the first parameter and the identifier information of the authentication server.

In a possible implementation method, the first network element is a policy control network element, and the method further includes: sending the identifier information of the authentication server to a session management network element.

In a possible implementation method, the method further includes: sending indication information to the session management network element, where the indication information indicates to perform authentication.

In a possible implementation method, the method further includes: after the authentication succeeds, receiving the first user identifier from the authentication server.

In the foregoing solution, after the authentication succeeds, the authentication server provides the first user identifier for the first network element, so that security of the first user identifier can be ensured.

According to a third aspect, an embodiment of this application provides a communication apparatus. The apparatus may be a terminal device, or may be a module (for example, a chip) used in the terminal device. The apparatus has a function of implementing any one of the implementation methods according to the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a first network element, or may be a module (for example, a chip) used in the first network element. The apparatus has a function of implementing any one of the implementation methods according to the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or means (means) configured to perform steps of any one of the implementation methods in the first aspect and the second aspect.

According to a sixth aspect, an embodiment of this application provides a communication apparatus, including a processor and an interface circuit. The processor is configured to communicate with another apparatus through the interface circuit, and perform any one of the implementation methods in the first aspect and the second aspect. There are one or more processors.

According to a seventh aspect, an embodiment of this application provides a communication apparatus, including a processor. The processor is configured to invoke a program, to perform any one of the implementation methods in the first aspect and the second aspect. In addition, there may be one or more processors.

Optionally, the communication apparatus may further include a memory. The memory is coupled to the processor. The memory may be located inside the apparatus, or may be located outside the apparatus.

According to an eighth aspect, an embodiment of this application provides a communication apparatus, including a processor. When the apparatus runs, the processor executes computer instructions, to cause the apparatus to perform any one of the implementation methods in the first aspect and the second aspect.

Optionally, the communication apparatus may further include a memory, and the memory is configured to store the computer instructions.

According to a ninth aspect, an embodiment of this application further provides a computer program product. The computer program product includes a computer program or instructions. When the computer program or the instructions are run by a communication apparatus, any one of the implementation methods in the first aspect and the second aspect is performed.

According to a tenth aspect, an embodiment of this application further provides a computer-readable storage medium. The computer-readable storage medium stores instructions. When the instructions are run on a communication apparatus, any one of implementation methods in the first aspect and the second aspect is performed.

According to an eleventh aspect, an embodiment of this application further provides a chip system, including a processor, configured to perform any one of the implementation methods in the first aspect and the second aspect.

### BRIEF DESCRIPTION OF DRAWINGS

FIG. 1 is a diagram of a 5G network architecture based on a service-based architecture;
FIG. 2a is a schematic flowchart of a communication method according to an embodiment of this application;
FIG. 2b is a schematic flowchart of a communication method according to an embodiment of this application;
FIG. 3 to FIG. 7 are schematic flowcharts of communication methods according to embodiments of this application;
FIG. 8 is a diagram of a communication apparatus according to an embodiment of this application; and
FIG. 9 is a diagram of a communication apparatus according to an embodiment of this application.

### DESCRIPTION OF EMBODIMENTS

To cope with challenges of wireless broadband technologies and maintain a leading position of a 3rd generation partnership project (3rd generation partnership project, 3GPP) network, the 3GPP standard group has formulated a next generation mobile communication network system (next generation system) architecture, which is referred to as a 5th generation (5th generation, 5G) network architecture. The architecture not only supports access to a 5G core network (core network, CN) using a radio access technology (for example, a long term evolution (long term evolution, LTE) access technology and a 5G radio access network (radio access network, RAN) access technology) defined by the 3GPP standard group, but also supports access to a core network using a non-3GPP (non-3GPP) access technology via a non-3GPP interworking function (non-3GPP interworking function, N3IWF) or a next generation access gateway (next generation packet data gateway, ngPDG).

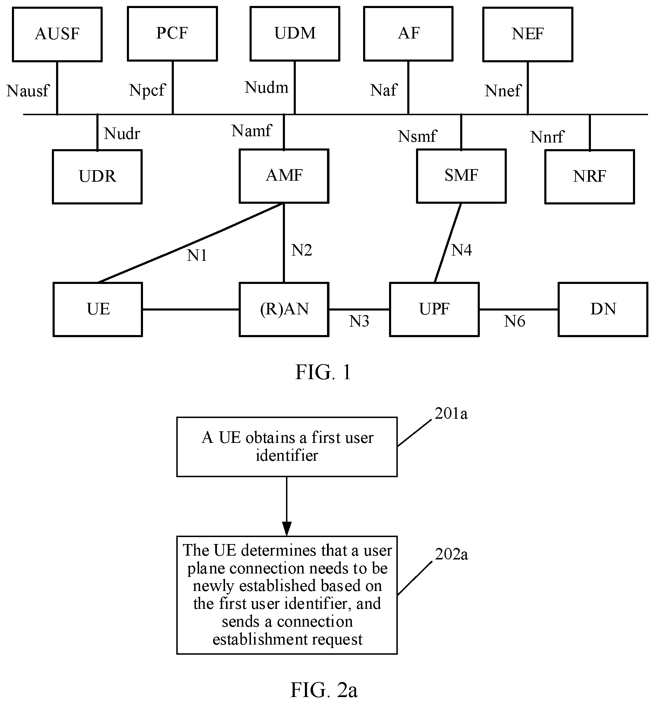

FIG. 1 is a diagram of a 5G network architecture based on a service-based architecture. The 5G network architecture shown in FIG. 1 may include an access network device and a core network device. A terminal device accesses a data network (data network, DN) via the access network device and the core network device. The core network device includes but is not limited to some or all of the following network elements: an authentication server function (authentication server function, AUSF) network element, a unified data management (unified data management, UDM) network element, a unified data repository (unified data repository, UDR) network element, a network repository function (network repository function, NRF) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, and a user plane function (user plane function, UPF) network element.

The terminal device may be a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer having a wireless transceiver function, a wearable device, a vehicle, an urban air transportation vehicle (for example, an uncrewed aerial vehicle or a helicopter), a ship, a robot, a mechanical arm, a smart home device, or the like. For ease of description, in this application, an example in which a UE is used as the terminal device is used for description, and a UE that appears at any location subsequently may be replaced with a terminal device.

The access network device may be a radio access network device or a wired access network device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, and a base station or a module or unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wired access network device includes but is not limited to: a wireline access gateway (wireline access gateway), a fixed-line phone network device, a switch, or a router. For ease of description, in this application, an example in which a base station is used as the access network device is used for description, and a base station that appears at any location subsequently may be replaced with an access network device.

The base station and the UE may be fixed or movable. The base station and the UE may be deployed on land, including an indoor device, an outdoor device, a handheld device, or a vehicle-mounted device; may be deployed on water; or may be deployed on an airplane, a balloon, and an artificial satellite in the air. Application scenarios of the base station and the UE are not limited in embodiments of this application.

The AMF network element includes mobility management, access authentication/authorization, or another function. In addition, the AMF network element is further responsible for transferring a user policy between the UE and the PCF.

The SMF network element includes session management, execution of a control policy delivered by the PCF network element, UPF network element selection, allocation of an internet protocol (internet protocol, IP) address of the UE, or another function.

The UPF network element includes user plane data forwarding, session/flow-level charging statistics, bandwidth limitation, or another function.

The UDM network element includes subscription data management, user access authorization, or another function.

The UDR includes functions of storage and retrieval of subscription data, policy data, application data, and other types of data.

The NEF network element is configured to support exposure of capabilities and events.

The AF network element transfers a requirement of an application side for a network side, for example, a quality of service (quality of service, QoS) requirement, user status event subscription, or the like. The AF may be a third-party functional entity, or may be an operator-deployed application service, for example, an IP multimedia subsystem (IP Multimedia Subsystem, IMS) voice call service. The AF network element includes an AF network element in a core network (that is, an AF network element of an operator) and a third-party AF network element (for example, an application server of an enterprise).

The PCF network element includes session-level or traffic flow-level charging, QoS bandwidth guarantee, mobility management, UE policy decision, or another policy control function. The PCF network element includes an access and mobility management policy control function (access and mobility management policy control function, AM PCF) network element and a session management policy control function (session management PCF, SM PCF) network element. The AM PCF network element is configured to formulate an AM policy and a user policy for a UE. The AM PCF network element may also be referred to as a policy control network element that provides a service for a UE (a PCF for a UE). The SM PCF network element is configured to formulate a session management policy (session management policy, SM policy) for a session, and the SM PCF network element may also be referred to as a policy control network element that provides a service for a protocol data unit (protocol data unit, PDU) session (a PCF for a PDU session).

The NRF network element may be configured to provide a network element discovery function, and provide, based on a request of another network element, network element information corresponding to a network element type. The NRF network element further provides a network element management service, for example, network element registration, update, and deregistration, or network element status subscription and push.

The AUSF network element is responsible for authenticating a user, to determine whether the user or a device is allowed to access a network.

The DN is a network outside an operator network. A plurality of DNs can access the operator network, and a plurality of services can be deployed on the DN, to provide services such as data and/or voice for a UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee in the company may be the UE, and the mobile phone or the computer of the employee can access information, data resources, or the like on the internal office network of the company.

Nausf, Npcf, Nudr, Nudm, Naf, Namf, Nsmf, Nnef and Nnrf in FIG. 1 are service-based interfaces (service-based interfaces, SBIs) provided by the AUSF, PCF, UDR, UDM, AF, AMF, SMF, NEF and NRF respectively, and are configured to invoke corresponding service-based operations. N1, N2, N3, N4, and N6 are interface sequence numbers. Meanings of these interface sequence numbers are as follows:
(1) N1 is an interface between the AMF network element and the UE, and may be configured to transfer non-access stratum (non-access stratum, NAS) signaling (for example, including a QoS rule from the AMF network element) to the UE, and the like.
(2) N2 is an interface between the AMF network element and the base station, and may be configured to transfer radio bearer control information from a core network side to the base station, and the like.
(3) N3 is an interface between the base station and the UPF network element, and is mainly configured to transfer uplink and downlink user plane data between the base station and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transfer uplink and downlink user data flows between the UPF network element and the DN.

It may be understood that the foregoing network element or function may be a network element in a hardware device, or may be a software function running on dedicated hardware or a virtualized function instantiated on a platform (for example, a cloud platform). Optionally, the network element or the function may be implemented by one device, may be jointly implemented by a plurality of devices, or may be a functional module in one device. This is not specifically limited in embodiments of this application.

A session management network element, a policy control network element, a unified data management network element, a unified data repository network element in this application may be respectively the SMF network element, the PCF network element, the UDM network element, and the UDR network element in FIG. 1, or may be network elements that have functions of the SMF network element, the PCF network element, the UDM network element, and the UDR network element in future communication such as a 6G network. This is not limited in this application. In this embodiment of this application, an example in which the SMF network element, the PCF network element, the UDM network element, and the UDR network element are respectively a session management network element, a policy control network element, a unified data management network element, and a unified data repository network element is used for description, and the SMF network element, the PCF network element, the UDM network element, and the UDR network element are respectively referred to as an SMF, a PCF, a UDM, and a UDR for short.

For ease of understanding of the present invention, the following first describes the background of the present invention.

### 1. User equipment route selection policy (UE route selection policy, URSP) rule

The URSP rule is used by a UE to determine whether to newly establish a PDU session for a new traffic flow. The URSP rule includes at least one traffic descriptor (traffic descriptor, TD) and a route selection descriptor (route selection descriptor, RSD) corresponding to each TD. The TD includes information used to perform matching on a traffic flow. For example, the TD includes one or more of an application descriptor (for example, one or more operating system identifiers (OSIds) or operating system application identifiers (OSAppIds)), an IP descriptor (for example, a destination IP triplet), a non-IP descriptor (for example, medium access control (medium access control, MAC) address information), a domain name (for example, a fully qualified domain name (fully qualified domain name, FQDN)), a data network name (data network name, DNN), or connection capability information.

The UE may perform matching on traffic flow information by using the TD in the URSP rule. When the traffic flow information matches a TD in a URSP rule, the UE determines an RSD corresponding to the TD in the URSP rule, and determines, based on the RSD, a parameter of a PDU session that needs to be established. If there is a PDU session that matches the parameter in established PDU sessions, the established PDU session is reused to transmit the traffic flow. If there is no PDU session that matches the parameter in the established PDU sessions, a PDU session is newly established and used to transmit the traffic flow.

### 2. Secondary authentication (also referred to as secondary authorization)

Secondary authentication refers to authentication that needs to be performed again when a UE successfully accesses a 5G network and attempts to access a specific network. Authentication and authorization performed by the AUSF and the UDM when the UE accesses the 5G network are referred to as primary authentication, primary authorization, first authentication, or first authorization.

The secondary authentication is to ensure the security of special networks. For example, if a bank employee attempts to access an internal network of the bank by using a mobile phone, secondary authentication is recommended, and the employee can perform service access only after the authentication succeeds.

During the secondary authentication, the UE should have special user credential information. The user credential is not a credential from an operator, but a credential between the UE and a specific network (for example, an enterprise network). The credential is usually a credential issued by the enterprise network. The secondary authentication is performed between the UE and an authentication server (for example, an authentication, authorization, and accounting (authentication, authorization, and accounting, AAA) server). The AAA server may also be referred to as a DN-AAA server.

To provide more flexible QoS guarantee, embodiments of this application provide a corresponding solution. FIG. 2a is a schematic flowchart of a communication method according to an embodiment of this application. The method may be performed by a UE or a module (for example, a chip) in the UE. The following uses an example in which the UE performs the method for description.

The method includes the following steps.

Step 201a: The UE obtains a first user identifier.

In an implementation method, the first user identifier represents a user using the UE. Based on the implementation method, different users use different user identifiers, and each user identifier represents one user. For example, the UE is a shared terminal, and different users can log in to the UE. The user identifier may include a user account, or include the user account and a user password. For example, a user identifier of a user 1 is a user identifier 1, and the user 1 may log in to the UE by using the user identifier 1, and access an application on the UE. For example, a user identifier of a user 2 is a user identifier 2, and the user 2 may log in to the UE by using the user identifier 2, and access an application on the UE.

In another implementation method, the first user identifier represents a first device connected to the UE. For example, the UE is a mobile phone, and the first device is a wearable device (for example, a smartwatch or a band) that can be connected to the mobile phone. In the present invention, the first device connected to the UE may be a 3GPP device or a non-3GPP device. This is not limited in this application. This applies throughout and will not be repeated below in other parts. Based on the implementation method, different first devices use different user identifiers, and each user identifier represents one first device. For example, a user identifier of a smartwatch 1 is a user identifier 1, and the smartwatch 1 may be connected to the mobile phone by using the user identifier 1. For example, a user identifier of a smartwatch 2 is a user identifier 2, and the smartwatch 2 may be connected to the mobile phone by using the user identifier 2. For example, a user identifier of a smart band 1 is a user identifier 3, and the smart band 1 may be connected to the mobile phone by using the user identifier 3. For example, a user identifier of a smart band 2 is a user identifier 4, and the smart band 2 may be connected to the mobile phone by using the user identifier 4.

In another implementation method, the first user identifier represents a user account used to access an application on the UE. Based on the implementation method, for a specific application, different user identifiers may be used to access the application, in other words, the user identifiers refer to user identifiers associated with the specific application. The user identifier may include a user account, or include the user account and a user password. For example, a video APP can be logged in to by using a user identifier 1, a user identifier 2, a user identifier 3, and the like.

For example, step 201a may specifically be: The UE obtains the first user identifier from the application on the UE, or obtains the first user identifier from the first device connected to the UE, for example, obtains the first user identifier from the first device through wireless fidelity (wireless fidelity, Wi-Fi).

For example, in this embodiment of this application, a user identifier may include domain name information and/or a user name. The domain name information may be, for example, information about a domain in which an authentication server is located. For example, the domain name information is an FQDN or a realm part. The user name is used to distinguish between different users. The user identifier may be, for example, the first user identifier described herein or a second user identifier described subsequently.

Step 202a: The UE determines that a user plane connection needs to be newly established based on the first user identifier, and sends a connection establishment request.

The connection establishment request is used to request to establish a user plane connection based on the first user identifier.

For example, the user plane connection may be a protocol data unit (protocol data unit, PDU) session or another type of connection. This is not limited in this application.

In the foregoing solution, the user plane connection is established based on the user identifier, and QoS guarantee for the user plane connection is related to the user identifier, where the user identifier may represent the user using the terminal device, or represent the first device connected to the terminal device, or represent the user account used to access the application on the terminal device, so that QoS guarantee is implemented at a user-identifier granularity, thereby achieving flexible QoS guarantee.

In an implementation method, when the user identifier represents the user using the UE, after a user logs in to the UE by using a user identifier, QoS guarantee used for accessing different applications on the UE is related to subscription data corresponding to the user identifier, while when different users log in to the UE by using different user identifiers, QoS guarantee used for accessing the application on the UE is related to a user currently using the UE. For example, a user 1 logs in to the UE by using a user identifier 1, and accesses an application on the UE. Regardless of the accessed application, corresponding QoS guarantee is used based on subscription data corresponding to the user identifier 1. For example, a user 2 logs in to the UE by using a user identifier 2, and accesses an application on the UE. Regardless of the accessed application, corresponding QoS guarantee is used based on subscription data corresponding to the user identifier 2.

In another implementation method, when the user identifier represents the first device connected to the UE, after a first device is connected to the UE by using a user identifier, QoS guarantee used for a service of the first device is related to the first device connected to the UE. For example, after a smartwatch 1 is connected to the mobile phone by using a user identifier 1, QoS guarantee used for a service of the smartwatch 1 is related to the smartwatch 1. For example, after a smartwatch 2 is connected to the mobile phone by using a user identifier 2, QoS guarantee used for a service of the smartwatch 2 is related to the smartwatch 2.

In another implementation method, when the user identifier represents the user account used to access the application on the UE, after a user account is used to log in to the application, QoS guarantee is performed based on subscription data corresponding to the user account, while when different user accounts are used to log in to a same application, corresponding QoS guarantee is performed based on subscription data corresponding to different user accounts. For example, after a user account 1 is used to log in to a video APP, corresponding QoS guarantee is performed based on subscription data corresponding to the user account 1. For example, after a user account 2 is used to log in to the same video APP, corresponding QoS guarantee is performed based on subscription data corresponding to the user account 2.

In an implementation method, after step 201a, the UE determines policy information corresponding to the first user identifier, and determines, based on the policy information, whether a user plane connection needs to be newly established based on the first user identifier. If a user plane connection needs to be newly established based on the first user identifier, step 202a is performed, that is, the connection establishment request is sent. If the user plane connection does not need to be newly established based on the first user identifier, an established user plane connection may be used to transmit data corresponding to the first user identifier.

The following describes, for different implementation methods of the policy information, specific implementation in which the UE determines whether a user plane connection needs to be newly established based on the first user identifier.

Implementation method 1: The policy information includes traffic flow information and route selection information, the traffic flow information includes a second user identifier, and the route selection information includes the second user identifier. Optionally, the route selection information may further include at least one of the following: domain name information in the first user identifier, domain name information in the second user identifier, or application information corresponding to the first user identifier.

The UE determines that the second user identifier in the traffic flow information matches the first user identifier, obtains the route selection information corresponding to the traffic flow information, and determines, based on the second user identifier in the route selection information, whether a user plane connection matching the second user identifier has been established. If no user plane connection matching the second user identifier has been established, it is determined that a user plane connection needs to be newly established based on the first user identifier, and subsequently, the newly established user plane connection may be used to transmit the data corresponding to the first user identifier. If an established user plane connection includes the user plane connection matching the second user identifier, the user plane connection matching the second user identifier is used to transmit the data corresponding to the first user identifier.

That the second user identifier matches the first user identifier may be, for example, that the second user identifier is the same as the first user identifier, or there is a correspondence between the second user identifier and the first user identifier, or the second user identifier and the first user identifier include same information, for example, include same domain name information.

Implementation method 2: The policy information includes traffic flow information and route selection information, the traffic flow information includes first domain name information, the route selection information includes indication information, and the indication information indicates to establish different user plane connections for user identifiers that do not match each other. Optionally, the route selection information may further include at least one of the following: the first domain name information, second domain name information in the first user identifier, or application information corresponding to the first user identifier.

In a possible implementation, mutual mismatch includes being completely different or not completely the same. "Completely different" herein means that information included in two user identifiers is completely different. "Not completely the same" herein means that some information included in two user identifiers is the same, and the other information is different. In other words, if information included in two user identifiers is completely the same, the two user identifiers match each other. For example, a user identifier 1 includes domain name information 1 and a user name 1, and a user identifier 2 includes domain name information 2 and a user name 2. If the domain name information 1 is the same as the domain name information 2, and the user name 1 is the same as the user name 2, the user identifier 1 is completely the same as the user identifier 2. Therefore, the user identifier 1 and the user identifier 2 match each other. If the domain name information 1 is the same as the domain name information 2, but the user name 1 is different from the user name 2, the user identifier 1 is not completely the same as the user identifier 2. Therefore, the user identifier 1 and the user identifier 2 do not match each other. If the domain name information 1 is different from the domain name information 2, but the user name 1 is the same as the user name 2, the user identifier 1 is not completely the same as the user identifier 2. Therefore, the user identifier 1 and the user identifier 2 do not match each other. If the domain name information 1 is different from the domain name information 2, and the user name 1 is different from the user name 2, the user identifier 1 is completely different from the user identifier 2. Therefore, the user identifier 1 and the user identifier 2 do not match each other.

In another possible implementation, mutual mismatch means no correspondence, and correspondingly, mutual match means correspondence. "Correspondence" herein means that there is a correspondence or a mapping relationship between two user identifiers. For example, if there is a correspondence between a user identifier 1 and a user identifier 2, that is, the user identifier 1 "corresponds to" the user identifier 2, a same user plane connection may be established for the user identifier 1 and the user identifier 2. If there is no correspondence between a user identifier 1 and a user identifier 2, that is, the user identifier 1 "does not correspond to" the user identifier 2, different user plane connections may be established for the user identifier 1 and the user identifier 2. It should be noted that whether two user identifiers match each other is not necessarily related to whether information in the two user identifiers is the same. In other words, if two user identifiers match each other, information included in the two user identifiers may be completely the same, may be completely different, or may be not completely the same. If two user identifiers do not match each other, information included in the two user identifiers may also be completely the same, may be completely different, or may be not completely the same.

The explanation of "mutual mismatch" herein is applicable to any embodiment of this application. This applies throughout and will not be repeated below.

The UE determines that the first domain name information in the traffic flow information matches the second domain name information in the first user identifier, obtains the route selection information corresponding to the traffic flow information, and determines, based on the indication information in the route selection information, whether a user plane connection matching the first user identifier has been established. If no user plane connection matching the first user identifier has been established, it is determined that a user plane connection needs to be newly established based on the first user identifier, and subsequently, the newly established user plane connection may be used to transmit the data corresponding to the first user identifier. If an established user plane connection includes the user plane connection matching the first user identifier, the user plane connection matching the first user identifier is used to transmit the data corresponding to the first user identifier.

That the second domain name information matches the first domain name information may be, for example, that the second domain name information is the same as the first domain name information, or there is a correspondence between the second domain name information and the first domain name information, or the second domain name information and the first domain name information include same information.

Implementation method 3: The policy information indicates to establish different user plane connections for user identifiers that do not match each other.

After obtaining the first user identifier, the UE determines, based on the policy information, whether a user plane connection matching the first user identifier has been established. If no user plane connection matching the first user identifier has been established, it is determined that a user plane connection needs to be newly established based on the first user identifier, and subsequently, the newly established user plane connection may be used to transmit the data corresponding to the first user identifier. If an established user plane connection includes the user plane connection matching the first user identifier, the user plane connection matching the first user identifier is used to transmit the data corresponding to the first user identifier.

For example, the policy information includes traffic flow information and route selection information, the traffic flow information includes first information, the first information matches any user identifier, and the route selection information includes the foregoing indication information. According to the method, after obtaining the first user identifier, the UE determines that the first user identifier matches the first information in the traffic flow information, obtains the route selection information corresponding to the traffic flow information, and determines, based on the indication information in the route selection information, whether a user plane connection matching the first user identifier has been established. If no user plane connection matching the first user identifier has been established, it is determined that a user plane connection needs to be newly established based on the first user identifier, and subsequently, the newly established user plane connection may be used to transmit the data corresponding to the first user identifier. If an established user plane connection includes the user plane connection matching the first user identifier, the user plane connection matching the first user identifier is used to transmit the data corresponding to the first user identifier.

Optionally, in addition to the indication information, the route selection information may further include at least one of second information, third information, or fourth information, where the second information indicates to send the first user identifier to a network, the third information indicates to send domain name information in the first user identifier to the network, and the fourth information indicates to send application information corresponding to the first user identifier to the network.

For example, the policy information in the implementation method 1 to the implementation method 3 may be a URSP, the traffic flow information in the policy information may be a TD in the URSP, and the route selection information in the policy information may be an RSD in the URSP.

In an implementation method, the connection establishment request in step 202a includes a first parameter, the first parameter is used to determine an authentication server, and the authentication server is configured to perform authentication on the first user identifier. The authentication server may be an AAA server, an AUSF network element, or the like.

In another implementation method, the connection establishment request in step 202a is carried in a NAS message. In addition to the connection establishment request, the NAS message further includes a first parameter. The first parameter is used to determine an authentication server, and the authentication server is configured to perform authentication on the first user identifier. The authentication server may be an AAA server, an AUSF network element, or the like.

For example, the first parameter includes one or more of the following: the first user identifier, the domain name information in the first user identifier, identifier information of the authentication server, or the application information corresponding to the first user identifier. Optionally, the information included in the first parameter may be from the policy information.

In this embodiment of this application, the application information corresponding to the first user identifier includes one or more of the following: identifier information of the application (for example, an APP ID, an APP address, or an APP domain), identifier information of an application server (for example, an APP server ID, an APP server address, or an APP server domain), identifier information of an application function service (for example, an AF service ID), identifier information of an application function (for example, an AF ID, an AF address, or an AF domain), the identifier information of the authentication server (for example, an AAA server ID, an AAA server address, an AAA server domain, an AUSF ID, or an AUSF address), or a domain name corresponding to the application.

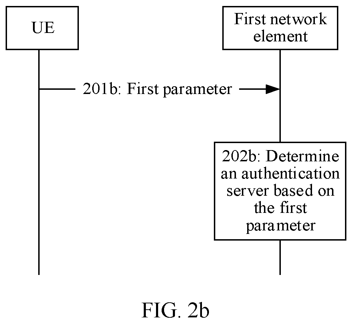

To select a correct authentication server, an embodiment of this application provides a corresponding solution. FIG. 2b is a schematic flowchart of a communication method according to an embodiment of this application. The method is performed by a first network element or a module (for example, a chip) in the first network element. The following uses an example in which the first network element performs the method for description. The first network element is an SMF or a PCF.

The method includes the following steps.

Step 201b: The first network element receives a first parameter from a UE.

In an implementation method, the first parameter is carried in a connection establishment request, and the connection establishment request is used to request to establish a user plane connection based on a first user identifier. For example, the UE sends a NAS message to an AMF, where the NAS message includes a session management container (SM container), the session management container includes the connection establishment request, the connection establishment request includes the first parameter, and the connection establishment request is used to request to establish a user plane connection based on the first user identifier. The AMF sends the session management container to an SMF. If the first network element is an SMF, the SMF may obtain the first parameter from the connection establishment request. If the first network element is a PCF, after the SMF obtains the first parameter from the connection establishment request, the PCF receives the first parameter sent by the SMF.

In another implementation method, the UE sends a NAS message to an AMF, where the NAS message includes a session management container, the session management container includes the first parameter and a connection establishment request, and the connection establishment request is used to request to establish a user plane connection based on a first user identifier. The AMF sends the session management container to an SMF. If the first network element is an SMF, the SMF may obtain the first parameter from the session management container. If the first network element is a PCF, after the SMF obtains the first parameter from the session management container, the PCF receives the first parameter from the SMF.

For example, the first parameter includes one or more of the following: the first user identifier, domain name information in the first user identifier, or application information corresponding to the first user identifier. For specific meanings of the first user identifier and the application information corresponding to the first user identifier, refer to the descriptions in the embodiment of FIG. 2a.

Step 202b: The first network element determines an authentication server based on the first parameter.

The authentication server is configured to perform authentication on the first user identifier. The authentication server may be an AAA server, an AUSF network element, or the like.

In an implementation method, step 202b may specifically be: The first network element sends a first request to a UDM, where the first request includes the first parameter; the UDM determines the authentication server based on the first parameter; and then the UDM sends a first response to the first network element, where the first response includes identifier information of the authentication server. The identifier information of the authentication server may include an identifier of the authentication server, address information of the authentication server, domain name information of the authentication server, or the like.

In another implementation method, step 202b may specifically be: The first network element sends a first request to a UDR, where the first request includes the first parameter; the UDR determines the authentication server based on the first parameter; and then the UDR sends a first response to the first network element, where the first response includes identifier information of the authentication server.

In another implementation method, step 202b may specifically be: The first network element sends a first request to an NRF, where the first request includes the first parameter; the NRF determines the authentication server based on the first parameter; and then the NRF sends a first response to the first network element, where the first response includes identifier information of the authentication server.

In another implementation method, when the first network element is an SMF, step 202b may specifically be: The first network element sends a first request to a PCF, where the first request includes the first parameter; the PCF determines the authentication server based on the first parameter; and then the PCF sends a first response to the first network element, where the first response includes identifier information of the authentication server.

In another implementation method, step 202b may specifically be: The first network element determines, based on local preconfigured information, identifier information that is of the authentication server and that corresponds to the first parameter, where the preconfigured information includes a correspondence between the first parameter and the identifier information of the authentication server.

For example, the first network element is a PCF. After determining the identifier information of the authentication server according to any one of the foregoing methods (that is, after step 202b), the PCF may send the identifier information of the authentication server to an SMF, so that the SMF cooperates with the authentication server based on the identifier information of the authentication server, to perform authentication on the first user identifier.

For example, the first network element is a PCF. When sending the identifier information of the authentication server to an SMF, the PCF may further send indication information to the SMF, where the indication information indicates to perform authentication. Certainly, if the PCF does not send the indication information to the SMF, the SMF may still determine, based on the received identifier information of the authentication server, that authentication needs to be performed. In other words, the identifier information of the authentication server implicitly indicates to perform authentication.

In an implementation method, after the authentication succeeds, the authentication server may send the first user identifier to the first network element. According to the method, the first parameter may not include the first user identifier or include an incomplete first user identifier, and then the authentication server provides the first user identifier for the first network element after the authentication succeeds, so that security of the first user identifier can be ensured.

In the foregoing solution, the UE provides the first parameter for the first network element, and the first network element determines, based on the first parameter, the authentication server configured to provide authentication for the UE, so that the authentication server is accurately determined, thereby helping ensure authentication accuracy.

It should be noted that the embodiment of FIG. 2a and the embodiment of FIG. 2b may be implemented separately, or may be implemented in combination. This is not limited in this application.

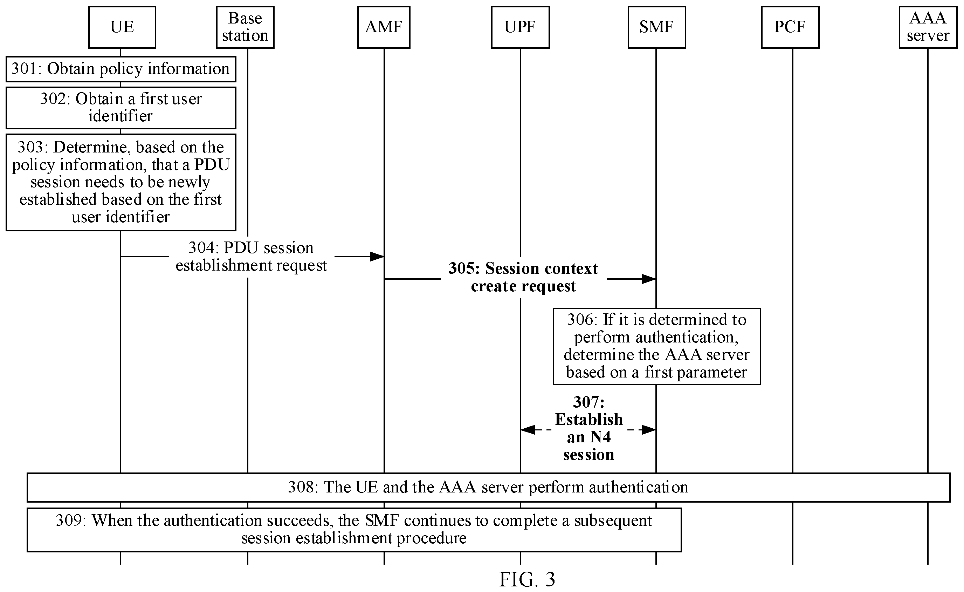

For ease of understanding of the embodiments of FIG. 2a and FIG. 2b, the following specifically describes the embodiments of FIG. 2a and FIG. 2b with reference to embodiments of FIG. 3 to FIG. 7. In the following embodiments of FIG. 3 to FIG. 7, a specific example in which an AAA server is used as an authentication server and a PDU session is used as a user plane connection is used for description. It should be noted that in the following embodiments of FIG. 3 to FIG. 7, any AAA server may be replaced with an authentication server function (AuthenticationServerFunction, AUSF) or another type of authentication server. Correspondingly, information related to the AAA server is also replaced with information related to the AUSF. For example, identifier information of the AAA server is replaced with identifier information of the AUSF. In addition, in the following embodiments of FIG. 3 to FIG. 7, a PDU session may be replaced with another type of user plane connection.

FIG. 3 is a flowchart of a communication method according to an embodiment of this application. In the method, a first user identifier is allocated by an application, and identifier information of an AAA server is determined by an SMF, where the AAA server is an AAA server in a DN.

The method includes the following steps.

Step 301: A UE obtains policy information.

For example, during or after a UE registration procedure, a PCF sends the policy information to the UE via an AMF.

For a meaning of the policy information, refer to the descriptions in the embodiment of FIG. 2a.

Step 302: The UE obtains the first user identifier.

For example, the UE obtains the first user identifier from an application on the UE, or obtains the first user identifier from another UE connected to the UE, for example, obtains the first user identifier from another UE through Wi-Fi.

Step 303: The UE determines, based on the policy information, that a PDU session needs to be newly established based on the first user identifier.

For specific implementation of this step, refer to the descriptions in the embodiment of FIG. 2a.

Step 304: The UE sends a PDU session establishment request (PDU Session Establishment Request) to the AMF. Correspondingly, the AMF receives the PDU session establishment request.

For example, the UE sends a NAS message to the AMF via a base station, where the NAS message includes the PDU session establishment request.

In an implementation method, in step 304, the UE further sends a first parameter to the AMF, where the first parameter is used to determine the AAA server. For example, the first parameter may be carried in the PDU session establishment request. For another example, the first parameter is carried in the NAS message, in other words, the NAS message includes the first parameter and the PDU session establishment request.

For specific content of the first parameter, refer to the descriptions in the embodiment of FIG. 2a.

For example, the PDU session establishment request may further include a PDU session identifier (PDU session ID), slice information (for example, single network slice selection assistance information (single network slice selection assistance information, S-NSSAI)), and a data network name (data network name, DNN).

Step 305: The AMF sends a session context create request to the SMF. Correspondingly, the SMF receives the session context create request.

For example, the session context create request may be Nsmf_PDUSession_CreateSMContext Request.

The session context create request includes identifier information of the UE (for example, a subscription permanent identifier (subscription permanent identifier, SUPI)) and the PDU session establishment request.

In an implementation method, if the UE further includes the first parameter in the PDU session establishment request in step 304, the SMF may obtain the first parameter from the PDU session establishment request.

In another implementation method, if the UE further includes, in step 304, the first parameter in the NAS message sent to the AMF, the session context create request may include the first parameter, in other words, the session context create request includes the identifier information of the UE, the PDU session establishment request, and the first parameter, so that the SMF may obtain the first parameter from the session context create request.

Step 306: If the SMF determines to perform authentication, the SMF determines the AAA server based on the first parameter.

The authentication herein may be secondary authentication or primary authentication. This is not limited in this application.

In a possible implementation, the SMF directly determines the AAA server based on the first parameter. For example, the first parameter includes the first user identifier or domain name information in the first user identifier, and the SMF may determine, based on the domain name information in the first user identifier, the AAA server corresponding to the domain name information. For another example, the first parameter includes the identifier information of the AAA server, and the SMF determines the AAA server based on the identifier information of the AAA server.

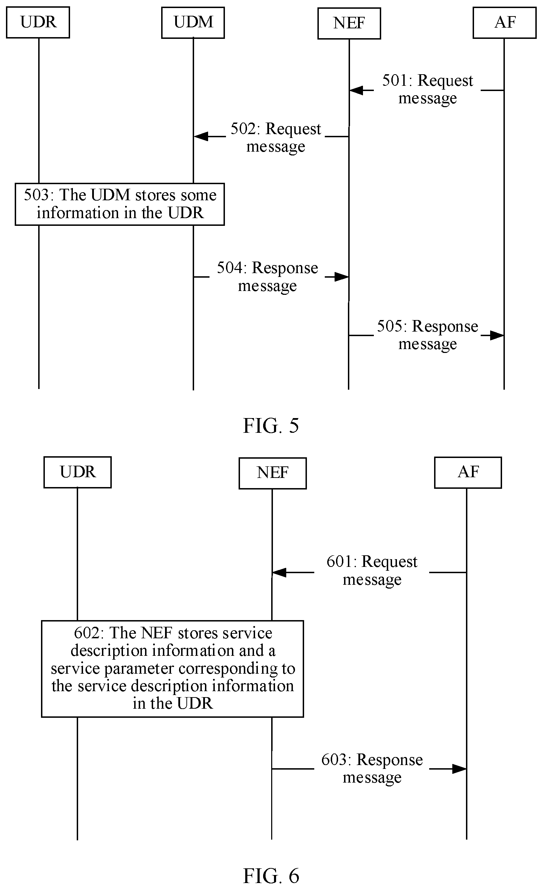

In another possible implementation, the SMF requests to obtain the identifier information of the AAA server from a UDM. For a specific implementation process in which the UDM stores the identifier information of the AAA server, refer to descriptions in an embodiment of FIG. 5. For a specific implementation in which the SMF requests to obtain the identifier information of the AAA server from the UDM, refer to related descriptions in the embodiment of FIG. 5.

Step 307: Establish an N4 session.

Step 307 is optional. When there is no existing N4 session that can be used to transmit messages between the SMF and the DN, the SMF selects a UPF and triggers N4 session establishment.

Step 308: The UE and the AAA server perform authentication.

For example, the UE and the AAA server perform authentication via the AMF, the SMF, and the UPF. After the authentication succeeds, the AAA server sends, to the SMF, information indicating that the authentication succeeds. For a detailed process of performing authentication by the UE and the AAA server, refer to related descriptions in the conventional technology. Details are not described herein.

In a possible implementation, to ensure security and privacy, the first parameter may not include the first user identifier or include an incomplete first user identifier, instead, the UE provides the first user identifier for the AAA server in the authentication process. Then, after the authentication succeeds, the AAA server sends the first user identifier to the SMF, and the SMF obtains corresponding QoS requirement information based on the first user identifier, and completes a subsequent session establishment procedure based on the QoS requirement information, to implement QoS guarantee.

Step 309: When the authentication succeeds, the SMF continues to complete the subsequent session establishment procedure.

In the foregoing solution, the PDU session may be established at a user-identifier granularity, so that differentiated QoS guarantee is performed at the user-identifier granularity, thereby improving the granularity and flexibility of QoS guarantee. In addition, in a scenario in which a plurality of AAA servers are deployed in a same DN, in this solution, the UE provides the first parameter for the SMF, and the SMF determines, from the plurality of AAA servers in the same DN based on the first parameter, the AAA server configured to provide authentication for the UE, so that the AAA server configured for authentication is accurately determined. In addition, after the authentication succeeds, the AAA server may further send the first user identifier to the SMF, instead of directly sending the first user identifier to the SMF by the UE, so that security and privacy of the user identifier are improved.

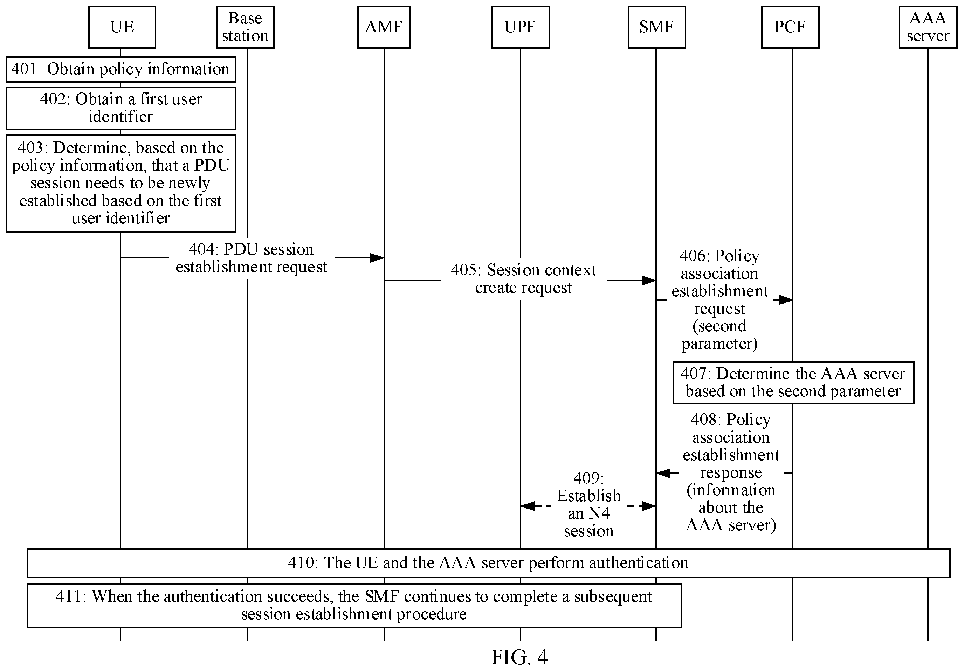

FIG. 4 is a flowchart of a communication method according to an embodiment of this application. In the method, a first user identifier is allocated by an application, and a PCF determines identifier information of an AAA server and sends the identifier information of the AAA server to an SMF, where the AAA server is an AAA server in a DN. The method includes the following steps.

Step 401 to step 405 are the same as step 301 to step 305 in the embodiment of FIG. 3.

Step 406: The SMF sends a policy association establishment request to the PCF. Correspondingly, the PCF receives the policy association establishment request.

The policy association establishment request is used to request to obtain a policy related to a session.

For example, the policy association establishment request may be SM Policy Association Establishment Request.

The policy association establishment request includes a second parameter, and the second parameter is used to determine the AAA server. The second parameter is obtained based on a first parameter.

The second parameter may include one or more of the following information items (1) to (4):
(1) identifier information of a UE;
(2) first user identifier;
(3) domain name information in the first user identifier; and
(4) application information corresponding to the first user identifier.

Step 407: The PCF determines the AAA server based on the second parameter.

In a possible implementation, the PCF directly determines the AAA server based on the second parameter. For example, the second parameter includes the first user identifier or the domain name information in the first user identifier, and the PCF may determine, based on the domain name information in the first user identifier, the AAA server corresponding to the domain name information. For another example, the second parameter includes the identifier information of the AAA server, and the PCF determines the AAA server based on the identifier information of the AAA server.

In another possible implementation, the PCF requests to obtain the identifier information of the AAA server from a UDR. For a specific implementation process in which the UDR stores the identifier information of the AAA server, refer to descriptions in an embodiment of FIG. 5 or FIG. 6. For a specific implementation in which the PCF requests to obtain the identifier information of the AAA server from the UDR, refer to related descriptions in the embodiment of FIG. 5 or FIG. 6.

Step 408: The PCF sends a policy association establishment response to the SMF. Correspondingly, the SMF receives the policy association establishment response.

If the PCF determines that authentication needs to be performed, the PCF includes the identifier information of the AAA server in the policy association establishment response. Optionally, the policy association establishment response further includes indication information, and the indication information indicates to perform authentication.

Step 409: Establish an N4 session.

Step 409 is optional. When there is no existing N4 session that can be used to transmit messages between the SMF and the DN, the SMF selects a UPF and triggers N4 session establishment.

Step 410: The UE and the AAA server perform authentication.

If the policy association establishment response includes the indication information indicating to perform authentication, the SMF determines, based on the indication information, that authentication needs to be performed. If the policy association establishment response does not include the indication information indicating to perform authentication, the SMF determines, based on the identifier information of the AAA server, that authentication needs to be performed.

For example, the UE and the AAA server perform authentication via an AMF, the SMF, and the UPF. After the authentication succeeds, the AAA server sends, to the SMF, information indicating that the authentication succeeds. For a detailed process of performing authentication by the UE and the AAA server, refer to related descriptions in the conventional technology. Details are not described herein.

In a possible implementation, to ensure security and privacy, the first parameter in step 404 may not include the first user identifier or include an incomplete first user identifier, instead, the UE provides the first user identifier for the AAA server in the authentication process. Then, after the authentication succeeds, the AAA server sends the first user identifier to the SMF, and the SMF obtains corresponding QoS requirement information based on the first user identifier, and completes a subsequent session establishment procedure based on the QoS requirement information, to implement QoS guarantee.

Step 411: When the authentication succeeds, the SMF continues to complete the subsequent session establishment procedure.

In the foregoing solution, the PDU session may be established at a user-identifier granularity, so that differentiated QoS guarantee is performed at the user-identifier granularity, thereby improving the granularity and flexibility of QoS guarantee. In addition, in a scenario in which a plurality of AAA servers are deployed in a same DN, in this solution, the UE provides the first parameter for the SMF, then the SMF provides the second parameter for the PCF, and the PCF determines, from the plurality of AAA servers in the same DN based on the second parameter, the AAA server configured to provide authentication for the UE, so that the AAA server configured for authentication is accurately determined. In addition, after the authentication succeeds, the AAA server may further send the first user identifier to the SMF, instead of directly sending the first user identifier to the SMF by the UE, so that security and privacy of the user identifier are improved.

FIG. 5 is a flowchart of a communication method according to an embodiment of this application. According to the method, identifier information of an AAA server can be stored in a UDM and/or a UDR. The method includes the following steps.

Step 501: An AF sends a request message to a NEF. Correspondingly, the NEF receives the request message.

For example, the request message may be a parameter provision create request (for example, Nnef_ParameterProvision_Create Request), or may be a parameter provision update request (for example, Nnef_ParameterProvision_Update Request).

The request message includes one or more of identifier information of the application function (for example, an AF ID or an AF address), a first user identifier, user configuration information, service configuration information, identifier information of the AAA server (for example, an AAA server ID or an AAA server address), or identifier information of a UE (for example, an SUPI). The user configuration information includes the first user identifier and the identifier information of the AAA server, and optionally, the user configuration information further includes a QoS requirement. The service configuration information includes the identifier information of the AAA server, and further includes the identifier information of the application function and/or identifier information of an application function service.

Step 502: The NEF sends a request message to the UDM. Correspondingly, the UDM receives the request message.

For example, the request message may be a parameter provision create request (for example, Nudm_ParameterProvision_Create Request), or may be a parameter provision update request (for example, Nudm_ParameterProvision_Update Request).

The request message includes one or more of the identifier information of the application function, the first user identifier, the user configuration information, the service configuration information, the identifier information of the AAA server, or the identifier information of the UE.

In a first implementation method, the UDM determines subscription data corresponding to the identifier information of the UE, and determines user configuration information in the subscription data. Based on the first implementation method, that the SMF determines the AAA server based on the first parameter in step 306 in the embodiment of FIG. 3 may be, for example, as follows: The SMF sends a query request to the UDM, where the query request includes the identifier information of the UE and the first user identifier; the UDM determines, based on the identifier information of the UE, subscription data corresponding to the identifier information of the UE; and then the UDM determines, from the subscription data based on the first user identifier, user configuration information corresponding to the first user identifier, and sends the identifier information of the AAA server included in the user configuration information to the SMF. Alternatively, the SMF sends a query request to the UDM, where the query request includes the identifier information of the UE; the UDM determines, based on the identifier information of the UE, subscription data corresponding to the identifier information of the UE, and sends the subscription data to the SMF; and the SMF determines, from the subscription data based on the first user identifier, user configuration information corresponding to the first user identifier, and determines the identifier information of the AAA server included in the user configuration information.

In a second implementation method, the UDM determines, based on the user identifier, the user configuration information corresponding to the user identifier. Based on the second implementation method, that the SMF determines the AAA server based on the first parameter in step 306 in the embodiment of FIG. 3 may be, for example, as follows: The SMF sends a query request to the UDM, where the query request includes the first user identifier; and the UDM determines, based on the first user identifier, user configuration information corresponding to the first user identifier, and sends, to the SMF, the identifier information of the AAA server included in the user configuration information. Alternatively, the SMF sends a query request to the UDM, where the query request includes the first user identifier; the UDM determines, based on the first user identifier, user configuration information corresponding to the first user identifier, and then sends the user configuration information to the SMF; and the SMF determines the identifier information of the AAA server included in the user configuration information.

In a third implementation method, the UDM determines the service configuration information based on service identifier information. Based on the third implementation method, that the SMF determines the AAA server based on the first parameter in step 306 in the embodiment of FIG. 3 may be, for example, as follows: The SMF sends a query request to the UDM, where the query request includes the identifier information of the application function and/or the identifier information of the application function service; and the UDM determines, based on the identifier information of the application function and/or the identifier information of the application function service, service configuration information corresponding to the identifier information of the application function and/or the identifier information of the application function service, and sends the identifier information of the AAA server included in the service configuration information to the SMF. Alternatively, the SMF sends a query request to the UDM, where the query request includes the identifier information of the application function and/or the identifier information of the application function service; the UDM determines, based on the identifier information of the application function and/or the identifier information of the application function service, service configuration information corresponding to the identifier information of the application function and/or the identifier information of the application function service, and then sends the service configuration information to the SMF; and the SMF determines the identifier information of the AAA server included in the service configuration information.

In a fourth implementation method, the UDM stores association information between the identifier information of the AAA server and index information. The index information includes one or more of the following: the identifier information of the application function, the first user identifier, or the identifier information of the UE. Based on the fourth implementation method, that the SMF determines the AAA server based on the first parameter in step 306 in the embodiment of FIG. 3 may be, for example, as follows: The SMF sends a query request to the UDM, where the query request includes the index information, and the UDM determines, based on the index information, the identifier information that is of the AAA server and that corresponds to the index information, and sends the identifier information of the AAA server to the SMF.

Step 503: The UDM stores some information in the UDR.

Step 503 is optional.

In a first implementation method, the UDM stores the user configuration information in the UDR.

Based on the first implementation method, that the SMF determines the AAA server based on the first parameter in step 306 in the embodiment of FIG. 3 may be, for example, as follows: The SMF sends a query request to the UDM, where the query request includes the first user identifier; the UDM sends the query request to the UDR, where the query request includes the first user identifier; the UDR obtains, based on the first user identifier, user configuration information corresponding to the first user identifier, and sends the identifier information of the AAA server included in the user configuration information to the UDM; and the UDM sends the identifier information of the AAA server to the SMF. Alternatively, the SMF sends a query request to the UDM, where the query request includes the first user identifier; the UDM sends the query request to the UDR, where the query request includes the first user identifier; the UDR determines, based on the first user identifier, user configuration information corresponding to the first user identifier, and then sends the user configuration information to the UDM; the UDM then sends the user configuration information to the SMF; and the SMF determines the identifier information of the AAA server included in the user configuration information.

Based on the first implementation method, that the PCF determines the AAA server based on the second parameter in step 407 in the embodiment of FIG. 4 may be, for example, as follows: The PCF sends a query request to the UDR, where the query request includes the identifier information of the UE and the first user identifier; the UDR determines, based on the identifier information of the UE, subscription data corresponding to the identifier information of the UE; and then the UDR determines, from the subscription data based on the first user identifier, user configuration information corresponding to the first user identifier, and sends the identifier information of the AAA server included in the user configuration information to the PCF. Alternatively, the PCF sends a query request to the UDR, where the query request includes the identifier information of the UE; the UDR obtains, based on the identifier information of the UE, subscription data corresponding to the identifier information of the UE, and then sends the subscription data to the PCF; and the PCF determines, from the subscription data based on the first user identifier, user configuration information corresponding to the first user identifier, and determines the identifier information of the AAA server included in the user configuration information.

In a second implementation method, the UDM stores the service configuration information in the UDR.

Based on the second implementation method, that the SMF determines the AAA server based on the first parameter in step 306 in the embodiment of FIG. 3 may be, for example, as follows: The SMF sends a query request to the UDM, where the query request includes the identifier information of the application function and/or the identifier information of the application function service; the UDM sends the query request to the UDR, where the query request includes the identifier information of the application function and/or the identifier information of the application function service; the UDR determines, based on the identifier information of the application function and/or the identifier information of the application function service, service configuration information corresponding to the identifier information of the application function and/or the identifier information of the application function service, and sends the identifier information of the AAA server included in the service configuration information to the UDM; and then the UDM sends the identifier information of the AAA server to the SMF. Alternatively, the SMF sends a query request to the UDM, where the query request includes the identifier information of the application function and/or the identifier information of the application function service; the UDM sends the query request to the UDR, where the query request includes the identifier information of the application function and/or the identifier information of the application function service; the UDR determines, based on the identifier information of the application function and/or the identifier information of the application function service, service configuration information corresponding to the identifier information of the application function and/or the identifier information of the application function service, and then sends the service configuration information to the UDM; the UDM sends the service configuration information to the SMF; and the SMF determines the identifier information of the AAA server included in the service configuration information.

Based on the second implementation method, that the PCF determines the AAA server based on the second parameter in step 407 in the embodiment of FIG. 4 may be, for example, as follows: The PCF sends a query request to the UDR, where the query request includes the identifier information of the application function and/or the identifier information of the application function service; and the UDR determines, based on the identifier information of the application function and/or the identifier information of the application function service, service configuration information corresponding to the identifier information of the application function and/or the identifier information of the application function service, and sends the identifier information of the AAA server included in the service configuration information to the PCF. Alternatively, the PCF sends a query request to the UDR, where the query request includes the identifier information of the application function and/or the identifier information of the application function service; the UDR determines, based on the identifier information of the application function and/or the identifier information of the application function service, service configuration information corresponding to the identifier information of the application function and/or the identifier information of the application function service, and then sends the service configuration information to the PCF; and the PCF determines the identifier information of the AAA server included in the service configuration information.

In a third implementation method, the UDM stores, in the UDR, association information between the identifier information of the AAA server and index information. The index information includes one or more of the following: the identifier information of the application function, the first user identifier, or the identifier information of the UE.

Based on the third implementation method, that the SMF determines the AAA server based on the first parameter in step 306 in the embodiment of FIG. 3 may be, for example, as follows: The SMF sends a query request to the UDM, where the query request includes the index information; the UDM sends the query request to the UDR, where the query request includes the index information; the UDR determines, based on the index information, the identifier information that is of the AAA server and that corresponds to the index information, and sends the identifier information of the AAA server to the UDM; and then the UDM sends the identifier information of the AAA server to the SMF.

Based on the third implementation method, that the PCF determines the AAA server based on the second parameter in step 407 in the embodiment of FIG. 4 may be, for example, as follows: The PCF sends a query request to the UDR, where the query request includes the index information; and the UDR determines, from the UDR based on the index information, the identifier information that is of the AAA server and that corresponds to the index information, and sends the identifier information of the AAA server to the PCF.

Step 504: The UDM sends a response message to the NEF. Correspondingly, the NEF receives the response message.

The response message may be a parameter provision create response (for example, Nudm_ParameterProvision_Create Response), or may be a parameter provision update response (for example, Nudm_ParameterProvision_Update Response).

Step 505: The NEF sends a response message to the AF. Correspondingly, the AF receives the response message.

For example, the response message may be a parameter provision create response (for example, Nnef_ParameterProvision_Create Response), or may be a parameter provision update response (for example, Nnef_ParameterProvision_ Update Response).

In the foregoing solution, the identifier information of the AAA server may be stored in the UDM and/or the UDR, so that the SMF may determine to request the identifier information of the AAA server from the UDM, and/or the PCF may determine to request the identifier information of the AAA server from the UDR.

FIG. 6 is a flowchart of a communication method according to an embodiment of this application. According to the method, identifier information of an AAA server can be stored in a UDR. The method includes the following steps.

Step 601: An AF sends a request message to a NEF. Correspondingly, the NEF receives the request message.

For example, the request message may be a service parameter create request (for example, Nnef_ServiceParameter_Create Request), or may be a service parameter update request (for example, Nnef_ServiceParameter_Update Request).

The request message includes service description information and a service parameter corresponding to the service description information.

The service description information indicates a service. For example, the service description information includes at least one of the following: identifier information of an application (for example, an APP ID or an APP address), identifier information of an application server (for example, an APP server ID or an APP server address), identifier information of an application function service (for example, an AF service ID), or identifier information of the application function (for example, an AF ID or an AF address).

The service parameter indicates parameter information corresponding to the service. For example, the service parameter includes the identifier information of the AAA server, and optionally, the service parameter further includes at least one of a first user identifier, domain name information, or identifier information of a UE.

Step 602: The NEF stores the service description information and the service parameter corresponding to the service description information in the UDR.

For example, that the PCF determines the AAA server based on the second parameter in step 407 in the embodiment of FIG. 4 may be, for example, as follows: The PCF sends a query request to the UDR, where the query request includes at least one of the identifier information of the UE, the first user identifier, the domain name information, the identifier information of the application, the identifier information of the application server, the identifier information of the application function service, or the identifier information of the application function; and the UDR determines the identifier information of the AAA server in the service parameter based on the query request, and sends the identifier information of the AAA server to the PCF.

Step 603: The NEF sends a response message to the AF. Correspondingly, the AF receives the response message.

For example, the response message may be a service parameter create response (for example, Nnef_ServiceParameter_Create Response), or may be a service parameter update response (for example, Nnef_ServiceParameter_Update Response).

In the foregoing solution, the identifier information of the AAA server can be stored in the UDR, so that the PCF can determine to request the identifier information of the AAA server from the UDR.

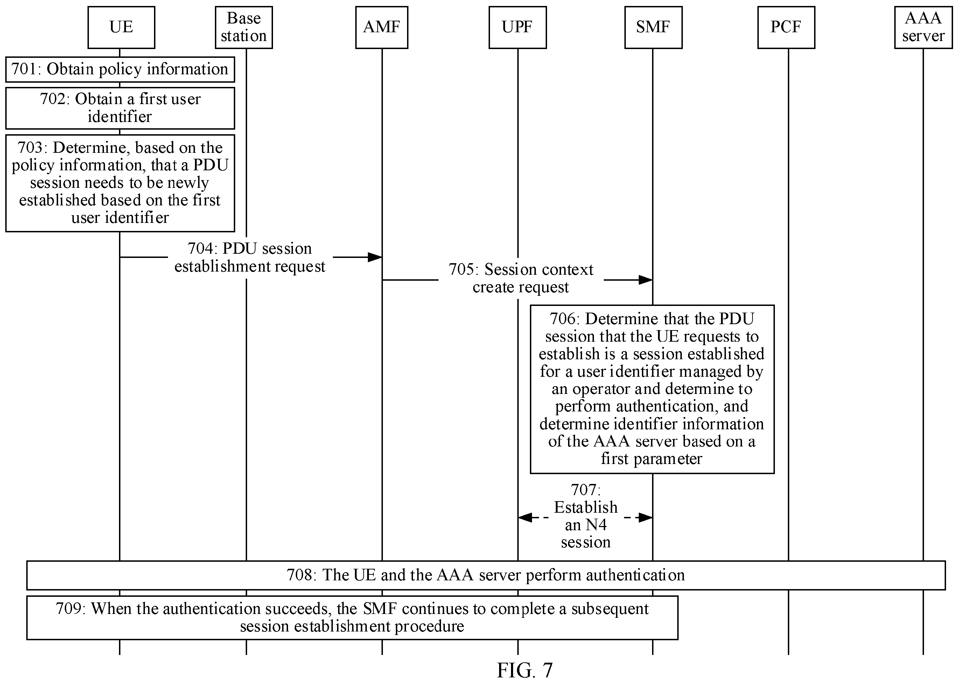

FIG. 7 is a flowchart of a communication method according to an embodiment of this application. In the method, a first user identifier is allocated by an operator, and an SMF determines identifier information of an AAA server based on a local configuration. The AAA server is not an AAA server in a DN, but an AAA server deployed by the operator, and the AAA server is irrelevant to an application service. The method includes the following steps.

Step 701 to step 705 are the same as step 301 to step 305 in the embodiment of FIG. 3.

Step 706: The SMF determines that a PDU session that a UE requests to establish is a session established for a user identifier managed by the operator and determines to perform authentication, and determines the identifier information of the AAA server based on a first parameter.

A correspondence between the first parameter and the identifier information of the AAA server is preconfigured on the SMF. Therefore, after obtaining the first parameter, the SMF may determine the corresponding identifier information of the AAA server based on the first parameter. The AAA server herein may be an AAA server deployed by the operator. For example, the SMF may determine, based on a user identifier included in a session establishment request, that the AAA server needs to perform authentication, and select the corresponding AAA server to perform an authentication procedure.

Step 707: Establish an N4 session.

Step 709 is optional. When there is no existing N4 session that can be used to transmit messages between the SMF and the DN, the SMF selects a UPF and triggers N4 session establishment.

Step 708: The UE and the AAA server perform authentication.

For example, the UE and the AAA server perform authentication via an AMF, the SMF, and the UPF. After the authentication succeeds, the AAA server sends, to the SMF, information indicating that the authentication succeeds. For a detailed process of performing authentication by the UE and the AAA server, refer to related descriptions in the conventional technology. Details are not described herein.

In a possible implementation, to ensure security and privacy, the first parameter may not include the first user identifier or include an incomplete first user identifier, instead, the UE provides the first user identifier for the AAA server in the authentication process. Then, after the authentication succeeds, the AAA server sends the first user identifier to the SMF, and the SMF obtains corresponding QoS requirement information based on the first user identifier, and completes a subsequent session establishment procedure based on the QoS requirement information, to implement QoS guarantee.

Step 709: When the authentication succeeds, the SMF continues to complete the subsequent session establishment procedure.

In the foregoing solution, the PDU session may be established at a user-identifier granularity, so that differentiated QoS guarantee is performed at the user-identifier granularity, thereby improving the granularity and flexibility of QoS guarantee. In addition, in a scenario in which the operator deploys a plurality of AAA servers, in this solution, the UE provides the first parameter for the SMF, and then the SMF determines, based on preconfigured information and the first parameter, the AAA server configured to provide authentication for the UE, so that the AAA server configured for authentication is accurately determined. In addition, after the authentication succeeds, the AAA server may further send the first user identifier to the SMF, instead of directly sending the first user identifier to the SMF by the UE, so that security and privacy of the user identifier are improved.

It may be understood that, to implement functions in the foregoing embodiments, the terminal device or the first network element includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

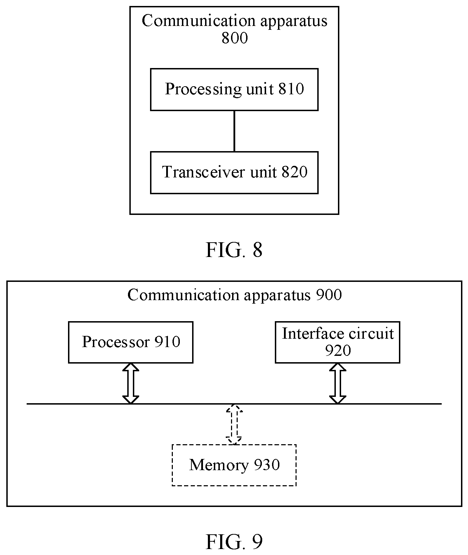

FIG. 8 and FIG. 9 are diagrams of structures of communication apparatuses according to embodiments of this application. The communication apparatuses may be configured to implement functions of the terminal device or the first network element in the foregoing method embodiments, and therefore can also implement beneficial effects of the foregoing method embodiments. In embodiments of this application, the communication apparatus may be a terminal device or a first network element, or may be a module (for example, a chip) used in the terminal device or the first network element.

A communication apparatus 800 shown in FIG. 8 includes a processing unit 810 and a transceiver unit 820. The communication apparatus 800 is configured to implement a function of the terminal device or the first network element in the foregoing method embodiments.

When the communication apparatus 800 is configured to implement a function of the terminal device in the foregoing method embodiments, the processing unit 810 is configured to: obtain a first user identifier, where the first user identifier represents a user using the terminal device, or represents a first device connected to the terminal device, or represents a user account used to access an application on the terminal device; and determine that a user plane connection needs to be newly established based on the first user identifier; and the transceiver unit 820 is configured to send a connection establishment request, where the connection establishment request is used to request to establish a user plane connection based on the first user identifier.

In a possible implementation method, that the processing unit 810 is configured to determine that the user plane connection needs to be newly established based on the first user identifier specifically includes: The processing unit 810 is configured to: determine policy information corresponding to the first user identifier, where the policy information includes traffic flow information and route selection information, the traffic flow information includes a second user identifier, the second user identifier in the traffic flow information matches the first user identifier, and the route selection information includes the second user identifier; determine, based on the second user identifier in the route selection information, whether a user plane connection matching the second user identifier has been established; and if no user plane connection matching the second user identifier has been established, determine that a user plane connection needs to be newly established based on the first user identifier.

In a possible implementation method, that the processing unit 810 is further configured to determine that the user plane connection needs to be newly established based on the first user identifier specifically includes: The processing unit 810 is configured to: determine policy information corresponding to the first user identifier, where the policy information includes traffic flow information and route selection information, the traffic flow information includes a second user identifier, the second user identifier in the traffic flow information matches the first user identifier, and the route selection information includes the second user identifier; determine, based on the second user identifier in the route selection information, whether a user plane connection matching the second user identifier has been established; and if an established user plane connection includes the user plane connection matching the second user identifier, transmit, by using the user plane connection matching the second user identifier, data corresponding to the first user identifier.

In a possible implementation method, the route selection information further includes at least one of the following: domain name information in the first user identifier, domain name information in the second user identifier, or application information corresponding to the first user identifier.

In a possible implementation method, that the processing unit 810 is configured to determine that the user plane connection needs to be newly established based on the first user identifier specifically includes: The processing unit 810 is configured to: determine policy information corresponding to the first user identifier, where the policy information includes traffic flow information and route selection information, the traffic flow information includes first domain name information, the first domain name information in the traffic flow information matches second domain name information in the first user identifier, the route selection information includes indication information, and the indication information indicates to establish different user plane connections for user identifiers that do not match each other; determine, based on the indication information in the route selection information, whether a user plane connection matching the first user identifier has been established; and if no user plane connection matching the first user identifier has been established, determine that a user plane connection needs to be newly established based on the first user identifier.

In a possible implementation method, the processing unit 810 is further configured to: determine policy information corresponding to the first user identifier, where the policy information includes traffic flow information and route selection information, the traffic flow information includes first domain name information, the first domain name information in the traffic flow information matches second domain name information in the first user identifier, the route selection information includes indication information, and the indication information indicates to establish different user plane connections for user identifiers that do not match each other; determine, based on the indication information in the route selection information, whether a user plane connection matching the first user identifier has been established; and if an established user plane connection includes the user plane connection matching the first user identifier, transmit, by using the user plane connection matching the first user identifier, data corresponding to the first user identifier.

In a possible implementation method, the route selection information further includes at least one of the following: the first domain name information, the second domain name information, or application information corresponding to the first user identifier.

In a possible implementation method, that the processing unit 810 is configured to determine that the user plane connection needs to be newly established based on the first user identifier specifically includes: The processing unit 810 is configured to: determine policy information corresponding to the first user identifier, where the policy information includes an indication indicating to establish different user plane connections for user identifiers that do not match each other; determine, based on the policy information, whether a user plane connection matching the first user identifier has been established; and if no user plane connection matching the first user identifier has been established, determine that a user plane connection needs to be newly established based on the first user identifier.

In a possible implementation method, the processing unit 810 is further configured to: determine policy information corresponding to the first user identifier, where the policy information indicates to establish different user plane connections for user identifiers that do not match each other; determine, based on the indication information in the route selection information, whether a user plane connection matching the first user identifier has been established; and if an established user plane connection includes the user plane connection matching the first user identifier, transmit, by using the user plane connection matching the first user identifier, data corresponding to the first user identifier.

In a possible implementation method, the policy information includes traffic flow information and route selection information, the traffic flow information includes first information, the first information matches any user identifier, and the route selection information includes the indication information.

In a possible implementation method, the route selection information further includes at least one of second information, third information, or fourth information, the second information indicates to send the first user identifier to a network, the third information indicates to send domain name information in the first user identifier to the network, and the fourth information indicates to send application information corresponding to the first user identifier to the network.

In a possible implementation method, the connection establishment request further includes a first parameter, the first parameter is used to determine an authentication server, and the authentication server is configured to perform authentication on the first user identifier.

In a possible implementation method, the connection establishment request is carried in a NAS message, the NAS message further includes a first parameter, the first parameter is used to determine an authentication server, and the authentication server is configured to perform authentication on the first user identifier.

In a possible implementation method, the first parameter includes one or more of the following: the first user identifier, the domain name information in the first user identifier, identifier information of the authentication server, or the application information corresponding to the first user identifier.

In a possible implementation method, the application information includes one or more of the following: identifier information of the application, identifier information of an application server, identifier information of an application function service, identifier information of an application function, the identifier information of the authentication server, or a domain name corresponding to the application.

In a possible implementation method, that the processing unit 810 is configured to obtain the first user identifier specifically includes: obtaining the first user identifier from the application on the terminal device; or obtaining the first user identifier from the first device.

When the communication apparatus 800 is configured to implement a function of the first network element in the foregoing method embodiments, the transceiver unit 820 is configured to receive a first parameter from a terminal device, where the first parameter includes one or more of the following: a first user identifier, domain name information in the first user identifier, or application information corresponding to the first user identifier, where the first user identifier represents a user using the terminal device, or represents a first device connected to the terminal device, or represents a user account used to access an application on the terminal device; and the processing unit 810 is configured to determine an authentication server based on the first parameter, where the authentication server is configured to perform authentication on the first user identifier.

In a possible implementation method, that the processing unit 810 is configured to determine the authentication server based on the first parameter specifically includes: The processing unit 810 is configured to: send a first request to a unified data management network element or a unified data repository network element through the transceiver unit 820, where the first request includes the first parameter; and receive a first response from the unified data management network element or the unified data repository network element, where the first response includes identifier information of the authentication server.

In a possible implementation method, that the processing unit 810 is configured to determine the authentication server based on the first parameter specifically includes: determining, based on preconfigured information, identifier information that is of the authentication server and that corresponds to the first parameter, where the preconfigured information includes a correspondence between the first parameter and the identifier information of the authentication server.

In a possible implementation method, the first network element is a policy control network element, and the transceiver unit 820 is further configured to send the identifier information of the authentication server to a session management network element.

In a possible implementation method, the transceiver unit 820 is further configured to send indication information to the session management network element, where the indication information indicates to perform authentication.

In a possible implementation method, the transceiver unit 820 is further configured to receive the first user identifier from the authentication server after the authentication succeeds.

For more detailed descriptions of the processing unit 810 and the transceiver unit 820, directly refer to related descriptions in the method embodiments. Details are not described herein.

A communication apparatus 900 shown in FIG. 9 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the foregoing method embodiments, the processor 910 is configured to implement functions of the processing unit 810, and the interface circuit 920 is configured to implement functions of the transceiver unit 820.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or the functions in embodiments of this application are all or partially executed. The computer may be a general-purpose computer, a dedicated computer, a computer network, an access network device, a terminal device, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a terminal device or a module in the terminal device, wherein the method comprises:
obtaining a first user identifier, wherein the first user identifier represents a user using the terminal device, or represents a first device connected to the terminal device, or represents a user account used to access an application on the terminal device; and
determining that a user plane connection needs to be newly established based on the first user identifier, and sending a connection establishment request, wherein the connection establishment request is used to request to establish a user plane connection based on the first user identifier.

2. The method according to claim 1, wherein the determining that the user plane connection needs to be newly established based on the first user identifier comprises:
determining policy information corresponding to the first user identifier, wherein the policy information comprises traffic flow information and route selection information, the traffic flow information comprises a second user identifier, the second user identifier in the traffic flow information matches the first user identifier, and the route selection information comprises the second user identifier;
determining, based on the second user identifier in the route selection information, whether a user plane connection matching the second user identifier has been established; and
if no user plane connection matching the second user identifier has been established, determining that a user plane connection needs to be newly established based on the first user identifier.

3. The method according to claim 1, wherein the method further comprises:
determining policy information corresponding to the first user identifier, wherein the policy information comprises traffic flow information and route selection information, the traffic flow information comprises a second user identifier, the second user identifier in the traffic flow information matches the first user identifier, and the route selection information comprises the second user identifier;
determining, based on the second user identifier in the route selection information, whether a user plane connection matching the second user identifier has been established; and
if an established user plane connection comprises the user plane connection matching the second user identifier, transmitting, by using the user plane connection matching the second user identifier, data corresponding to the first user identifier.

4. The method according to claim 3, wherein the route selection information further comprises at least one of the following: domain name information in the first user identifier, domain name information in the second user identifier, or application information corresponding to the first user identifier.

5. The method according to claim 1, wherein the determining that the user plane connection needs to be newly established based on the first user identifier comprises:
determining policy information corresponding to the first user identifier, wherein the policy information comprises traffic flow information and route selection information, the traffic flow information comprises first domain name information, the first domain name information in the traffic flow information matches second domain name information in the first user identifier, the route selection information comprises indication information, and the indication information indicates to establish different user plane connections for user identifiers that do not match each other;
determining, based on the indication information in the route selection information, whether a user plane connection matching the first user identifier has been established; and
if no user plane connection matching the first user identifier has been established, determining that a user plane connection needs to be newly established based on the first user identifier.

6. The method according to claim 1, wherein the method further comprises:
determining policy information corresponding to the first user identifier, wherein the policy information comprises traffic flow information and route selection information, the traffic flow information comprises first domain name information, the first domain name information in the traffic flow information matches second domain name information in the first user identifier, the route selection information comprises indication information, and the indication information indicates to establish different user plane connections for user identifiers that do not match each other;
determining, based on the indication information in the route selection information, whether a user plane connection matching the first user identifier has been established; and
if an established user plane connection comprises the user plane connection matching the first user identifier, transmitting, by using the user plane connection matching the first user identifier, data corresponding to the first user identifier.

7. The method according to claim 5 or 6, wherein the route selection information further comprises at least one of the following: the first domain name information, the second domain name information, or application information corresponding to the first user identifier.

8. The method according to claim 1, wherein the determining that the user plane connection needs to be newly established based on the first user identifier comprises:
determining policy information corresponding to the first user identifier, wherein the policy information comprises an indication indicating to establish different user plane connections for user identifiers that do not match each other;
determining, based on the policy information, whether a user plane connection matching the first user identifier has been established; and
if no user plane connection matching the first user identifier has been established, determining that a user plane connection needs to be newly established based on the first user identifier.

9. The method according to claim 1, wherein the method further comprises:
determining policy information corresponding to the first user identifier, wherein the policy information indicates to establish different user plane connections for user identifiers that do not match each other;
determining, based on the indication information in the route selection information, whether a user plane connection matching the first user identifier has been established; and
if an established user plane connection comprises the user plane connection matching the first user identifier, transmitting, by using the user plane connection matching the first user identifier, data corresponding to the first user identifier.

10. The method according to claim 8 or 9, wherein the policy information comprises traffic flow information and route selection information, the traffic flow information comprises first information, the first information matches any user identifier, and the route selection information comprises the indication information.

11. The method according to claim 10, wherein the route selection information further comprises at least one of second information, third information, or fourth information, the second information indicates to send the first user identifier to a network, the third information indicates to send domain name information in the first user identifier to the network, and the fourth information indicates to send application information corresponding to the first user identifier to the network.

12. The method according to any one of claims 1 to 11, wherein the connection establishment request further comprises a first parameter, the first parameter is used to determine an authentication server, and the authentication server is configured to perform authentication on the first user identifier.

13. The method according to any one of claims 1 to 11, wherein the connection establishment request is carried in a non-access stratum NAS message, the NAS message further comprises a first parameter, the first parameter is used to determine an authentication server, and the authentication server is configured to perform authentication on the first user identifier.

14. The method according to claim 12 or 13, wherein the first parameter comprises one or more of the following: the first user identifier, the domain name information in the first user identifier, identifier information of the authentication server, or the application information corresponding to the first user identifier.

15. The method according to claim 4, 7, 11, or 14, wherein the application information comprises one or more of the following:
identifier information of the application, identifier information of an application server, identifier information of an application function service, identifier information of an application function, the identifier information of the authentication server, or a domain name corresponding to the application.

16. The method according to any one of claims 1 to 15, wherein the obtaining the first user identifier comprises:
obtaining the first user identifier from the application on the terminal device; or
obtaining the first user identifier from the first device.

17. A communication method, applied to a first network element or a module in the first network element, wherein the method comprises:
receiving a first parameter from a terminal device, wherein the first parameter comprises one or more of the following: a first user identifier, domain name information in the first user identifier, or application information corresponding to the first user identifier, wherein the first user identifier represents a user using the terminal device, or represents a first device connected to the terminal device, or represents a user account used to access an application on the terminal device; and
determining an authentication server based on the first parameter, wherein the authentication server is configured to perform authentication on the first user identifier.

18. The method according to claim 17, wherein the determining the authentication server based on the first parameter comprises:
sending a first request to a unified data management network element or a unified data repository network element, wherein the first request comprises the first parameter; and
receiving a first response from the unified data management network element or the unified data repository network element, wherein the first response comprises identifier information of the authentication server.

19. The method according to claim 17, wherein the determining the authentication server based on the first parameter comprises:
determining, based on preconfigured information, identifier information that is of the authentication server and that corresponds to the first parameter, wherein the preconfigured information comprises a correspondence between the first parameter and the identifier information of the authentication server.

20. The method according to any one of claims 17 to 19, wherein the first network element is a policy control network element, and the method further comprises:
sending the identifier information of the authentication server to a session management network element.

21. The method according to claim 20, wherein the method further comprises:
sending indication information to the session management network element, wherein the indication information indicates to perform authentication.

22. The method according to any one of claims 17 to 21, wherein the method further comprises:
after the authentication succeeds, receiving the first user identifier from the authentication server.

23. A communication apparatus, comprising a module configured to perform the method according to any one of claims 1 to 16, or perform the method according to any one of claims 17 to 22.

24. A communication apparatus, comprising a processor and an interface circuit, wherein the processor is configured to communicate with another apparatus through the interface circuit, and perform the method according to any one of claims 1 to 16, or perform the method according to any one of claims 17 to 22.

25. A computer program product, wherein the computer program product comprises instructions, and when the instructions are run on a processor, the processor is caused to perform the method according to any one of claims 1 to 16, or perform the method according to any one of claims 17 to 22.

26. A computer-readable storage medium, wherein the storage medium stores a computer program or instructions, and when the computer program or the instructions are executed by a communication apparatus, the method according to any one of claims 1 to 16 is implemented, or the method according to any one of claims 17 to 22 is implemented.
